# EUROPEAN PATENT APPLICATION

(11) **EP 4 708 641 A1**
(43) Date of publication of application: **11.03.2026**
(21) Application number: 25200111.0
(22) Date of filing: 04.09.2025
(51) Int. Cl.: H02K 5/173, H02K 11/40, H02K 7/116

(54) **DRIVE DEVICE**

(30) Priority: 10.09.2024 JP 2024155465
(71) Applicant: AISIN CORPORATION, Aichi 448-8650 (JP)
(72) Inventor: KONDO, Shinji, Kariya, Aichi 448-8650 (JP); INABA, Takaaki, Kariya, Aichi 448-8650 (JP); FUJITA, Hiroshi, Kariya, Aichi 448-8650 (JP)
(74) Representative: Kramer Barske Schmidtchen Patentanwälte PartG mbB

(57) **Abstract**

A drive device (1) includes: a rotor (11); a stator (12) including a coil (13); a target rotary shaft (15) to which rotation of the rotor (11) is transmitted; a case (2) accommodating the rotor (11), the stator (12), and the target rotary shaft (15); a target bearing (B2) configured to rotatably support the target rotary shaft (15) with respect to the case (2); and an electrical connection member (3) configured to electrically connect the target rotary shaft (15) and the case (2). A direction along a rotation axis (A1) of the target rotary shaft (15) is an axial direction (L), a direction orthogonal to the rotation axis (A1) is a radial direction (R), and one side in the axial direction (L) is a first axial side (L1). The case (2) includes a bearing support portion (21) configured to support the target bearing (B2), a facing wall portion (22) disposed on the first axial side (L1) with respect to the bearing support portion (21) and facing the target bearing (B2) from the first axial side (L1), and a surrounding wall portion (23) surrounding a target space (E) from an outer side (R2) in the radial direction (R), the target space being a space between the facing wall portion (22) and the target bearing (B2) in the axial direction (L). The electrical connection member (3) includes a contact portion (31) configured to electrically connect members that rotate relative to each other by sliding contact. The contact portion (31) is disposed in the target space (E). A recess (5) formed to be partially recessed from an inner surface (23a) of the surrounding wall portion (23) toward the outer side (R2) in the radial direction (R) is provided in a lower portion (V2) of the surrounding wall portion (23).

## Description

### TECHNICAL FIELD

This disclosure relates to a drive device.

### BACKGROUND DISCUSSION

JP 2016-119760A (Reference 1) discloses, as an example of a drive device, a rotary electric machine (1) in which a rotor (3) and a stator (4) are accommodated in a case (2) (reference numerals in parentheses in BACKGROUND DISCUSSION are those in the Reference 1). The rotor (3) is supported by a rotor shaft (31) that rotates integrally with the rotor (3), and the rotor shaft (31) is rotatably supported by the case (2) via a bearing. In such a drive device, an eddy current generated in the rotor (3) due to a change in a magnetic field generated in the stator (4) may be emitted as electromagnetic noise from the drive device. Therefore, the rotary electric machine (1) includes a grounding mechanism (7) as an electrical connection member that comes into contact with the rotor shaft (31) to discharge the eddy current to the case (2), at an end portion (311) of the rotor shaft (31). The grounding mechanism (7) includes a brush (70) that comes into contact with an end surface (311A) of the rotor shaft (31).

Here, when the brush (70) and the end surface (311A) of the rotor shaft (31) come into contact with each other, a conductive abrasion powder is generated. When the abrasion powder diffuses in the case (2), the abrasion powder may electrically influence the stator (4), a resolver (5), and the like to cause a short circuit or the like, or may mechanically influence the bearing to cause scratches, abrasion or the like. Therefore, in the rotary electric machine (1), the brush (70) is accommodated in an accommodation portion (71) surrounded by a first member (72) and a second member (73) both having a bottomed cylindrical shape. The accommodation portion (71) is formed by a labyrinth structure in which a cylindrical wall (721) of the first member (72) and a cylindrical wall (731) of the second member (73) overlap each other with a gap therebetween in a radial direction, so that release of the abrasion powder to the outside of the accommodation portion (71) is prevented.

In the above structure, a space for disposing the cylindrical wall of the first member and the cylindrical wall of the second member to overlap each other is required in the radial direction of the rotor shaft, and a space for extending the cylindrical wall from both one side and the other side in the axial direction is required on the one side in the axial direction from the end portion of the rotor shaft. Therefore, it is likely to hinder miniaturization of the drive device.

In view of the above background, it is desirable to prevent the diffusion of the abrasion powder generated by the electrical connection member into the case while preventing an increase in size of the drive device.

### SUMMARY

According to an aspect of this disclosure, a drive device includes: a rotor; a stator including a coil; a target rotary shaft to which rotation of the rotor is transmitted; a case accommodating the rotor, the stator, and the target rotary shaft; a target bearing configured to rotatably support the target rotary shaft with respect to the case; and an electrical connection member configured to electrically connect the target rotary shaft and the case. A direction along a rotation axis of the target rotary shaft is an axial direction, a direction orthogonal to the rotation axis is a radial direction, and one side in the axial direction is a first axial side. The case includes a bearing support portion configured to support the target bearing, a facing wall portion disposed on the first axial side with respect to the bearing support portion and facing the target bearing from the first axial side, and a surrounding wall portion surrounding a target space from an outer side in the radial direction, the target space being a space between the facing wall portion and the target bearing in the axial direction. The electrical connection member includes a contact portion configured to electrically connect members that rotate relative to each other by sliding contact. The contact portion is disposed in the target space. A recess formed to be partially recessed from an inner surface of the surrounding wall portion toward the outer side in the radial direction is provided in a lower portion of the surrounding wall portion.

According to this configuration, when an abrasion powder is generated by the sliding contact of the electrical connection member, the abrasion powder can be accumulated in the recess. Accordingly, it is possible to reduce a possibility that the abrasion powder moves from the contact portion and influences the target bearing and other members. Since the recess where the abrasion powder is accumulated has a simple configuration formed to be recessed in the lower portion of the inner surface of the surrounding wall portion, it is easy to avoid an increase in size of the drive device. That is, according to this configuration, it is possible to prevent the diffusion of the abrasion powder generated by the electrical connection member into the case while preventing the increase in size of the drive device.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a schematic skeleton diagram of a vehicle drive device;
FIG. 2 is a partially enlarged cross-sectional view of the vehicle drive device;
FIG. 3 shows a partially enlarged portion of the vehicle drive device as viewed in an axial direction;
FIG. 4 is a partially enlarged perspective view of the vehicle drive device;
FIG. 5 is a partially enlarged cross-sectional view of a vehicle drive device according to a first comparative example;
FIG. 6 is a partially enlarged cross-sectional view of a vehicle drive device according to a second comparative example;
FIG. 7 is a partially enlarged cross-sectional view of a vehicle drive device according to a third comparative example;
FIG. 8 is a partially enlarged cross-sectional view of a vehicle drive device according to a fourth comparative example; and
FIG. 9 is a partially enlarged cross-sectional view of a vehicle drive device according to a fifth comparative example.

### DETAILED DESCRIPTION

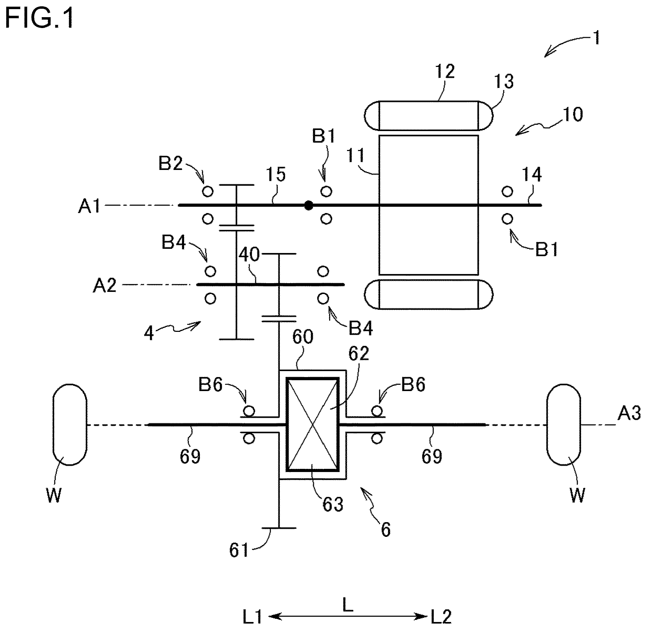

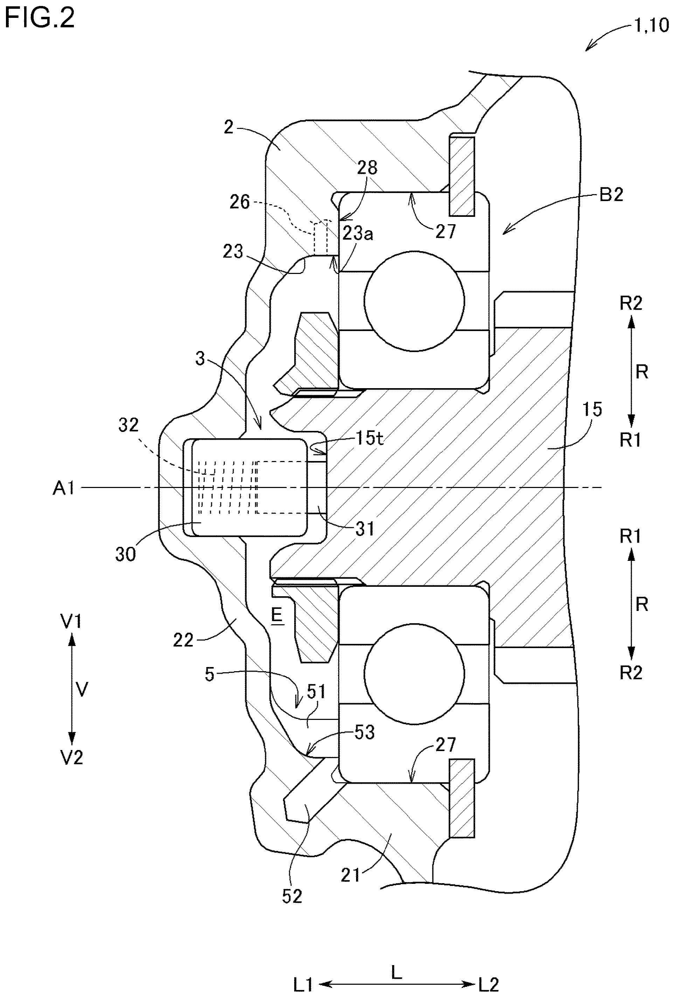

Hereinafter, a drive device according to an embodiment will be described with reference to the drawings. In the present embodiment, as shown in FIG. 1, a vehicle drive device 1 including a rotary electric machine 10 serving as a drive force source of wheels W in a vehicle, a counter gear mechanism 4 serving as a speed reducer, and a differential gear mechanism 6 that distributes power to the two wheels W is exemplified as the drive device. Although details will be described later, the vehicle drive device 1 includes a rotor 11, a stator 12 including a coil 13, target rotary shafts (a rotor shaft 14, an input shaft 15, and a counter shaft 40) to which rotation of the rotor 11 is transmitted, a case 2 that accommodates the rotor 11, the stator 12, and the target rotary shafts, target bearings (a rotor bearing B1, an input bearing B2, and a counter bearing B4) that rotatably support the target rotary shafts with respect to the case 2, and an electrical connection member 3 (see FIG. 2) that electrically connects the target rotary shafts and the case 2. The drive device sufficiently includes at least the rotary electric machine 10. That is, the drive device may be the rotary electric machine 10 including the rotor 11, the stator 12 including the coil 13, the target rotary shaft (the rotor shaft 14 or the input shaft 15) to which the rotation of the rotor 11 is transmitted, the case 2 that accommodates the rotor 11, the stator 12, and the target rotary shaft, the target bearing (the rotor bearing B1 or the input bearing B2) that rotatably supports the target rotary shaft with respect to the case 2, and the electrical connection member 3 (see FIG. 2) that electrically connects the target rotary shaft and the case 2.

In the present embodiment, the vehicle drive device 1 having a three-axis configuration in which a rotating member is disposed with a first axis A1, a second axis A2, and a third axis A3, which are different axes parallel to one another, as rotation axes is exemplified. The rotary electric machine 10 is disposed on the first axis A1. On the second axis A2, the counter gear mechanism 4 is disposed as the speed reducer that decelerates the rotation of the rotor 11 of the rotary electric machine 10. The differential gear mechanism 6 that distributes power transmitted from the rotor 11 via the speed reducer to the pair of wheels W is disposed on the third axis A3. In the shown example, the differential gear mechanism 6 is a bevel gear type differential mechanism. A plurality of differential pinion gears 63 and a pair of differential side gears 62 are accommodated in a differential case 60 that is coupled to a differential input gear 61 and that rotates integrally with the differential input gear 61. The differential side gears 62 are respectively coupled to the pair of wheels W via, for example, a drive shaft 69.

In the present embodiment, a direction along the first axis A1 is an axial direction L, one side in the axial direction L is a first axial side L1, and the other side in the axial direction L is a second axial side L2. In addition, a direction orthogonal to each axis is defined as a radial direction R with each axis as a reference, a direction approaching the axis in the radial direction R is a radial inner side R1, and a direction away from the axis is a radial outer side R2. Further, in an in-vehicle state in which the vehicle drive device 1 is mounted on a vehicle, a direction along a vertical direction is an upper-lower direction V, an upper side in the upper-lower direction V is an upper side V1, and a lower side is a lower side V2.

The rotary electric machine 10 is a traction motor that is supplied with electric power from an in-vehicle DC power supply (not shown) and that serves as the drive force source of the wheels W, and also functions as a generator that generates electric power by the power transmitted from the wheels W and the like and that charges the DC power supply. The rotor 11 is supported by the rotor shaft 14 that is coupled to the rotor 11 and that rotates integrally with the rotor 11. The rotor shaft 14 is rotatably supported with respect to the case 2 by a pair of rotor bearings B1 disposed on both sides in the axial direction L with the rotor 11 interposed therebetween. The rotor shaft 14 is coupled to the input shaft 15 on the first axial side L1, and the rotor shaft 14 and the input shaft 15 rotate integrally. The input shaft 15 is rotatably supported by the case 2 via the input bearing B2 on the first axial side L1 opposite to the second axial side L2 coupled to the rotor shaft 14. The counter shaft 40 of the counter gear mechanism 4 is rotatably supported by the case 2 via a pair of the counter bearings B4 disposed on both sides of the counter gear mechanism 4 in the axial direction L. The differential case 60 is rotatably supported by the case 2 via differential bearings B6 disposed on both sides in the axial direction L with the differential case 60 interposed therebetween.

A configuration of the vehicle drive device 1 (drive device) is not limited to the shown form. For example, the vehicle drive device 1 may have a two-axis configuration (folded two-axis configuration) in which the differential gear mechanism 6 is disposed on the first axis A1. In addition, the vehicle drive device 1 may have a two-axis configuration in which the speed reducer is implemented by a planetary gear mechanism disposed coaxially with the rotor 11. Further, the vehicle drive device 1 may have a one-axial configuration in which the rotor 11, the speed reducer such as a planetary gear mechanism, and the differential gear mechanism 6 implemented by a bevel gear mechanism or a planetary gear mechanism are coaxially disposed. The vehicle drive device 1 may have a configuration having four or more axes in which the speed reducer is disposed on two or more axes. The vehicle drive device 1 may not include the differential gear mechanism 6, and the power of the rotary electric machine 10 may be transmitted to one wheel W. In addition, it does not preclude the vehicle drive device 1 from being provided with an internal combustion engine (not shown) that provides power to the rotary electric machine 10 when the rotary electric machine 10 functions as a generator. Regardless of a form of a power transmission mechanism that transmits the power between the rotary electric machine 10 and the wheels W, the power transmission mechanism can include various transmission shafts and various gears. The power transmission mechanism may include engagement elements such as a clutch and a brake.

When an alternating current flows through the coil 13, an eddy current may be generated in the rotor 11 formed by laminating, for example, electromagnetic steel sheets or the rotor shaft 14 made of a metal due to a rotating magnetic field generated in the stator 12. Accordingly, the rotor shaft 14 and the input shaft 15 coupled to the rotor shaft 14 are charged. Since oil for lubrication is supplied to the bearings that support the rotor shaft 14 and the input shaft 15, the rotor shaft 14 and the input shaft 15 are insulated from the case 2 and the bearings by an oil film, and a potential difference is generated therebetween. However, since the oil film is thin and not necessarily uniform, there is a portion where insulation is partially insufficient. In such an insufficiently insulated portion, spark discharge may occur from the rotor shaft 14 or the input shaft 15 to the case 2 or the bearing. The spark discharge may cause deterioration of the bearing or release of electromagnetic noise. Therefore, in the present embodiment, the electrical connection member 3, which is a grounding member for discharging the eddy current from the rotor shaft 14 and the input shaft 15 to the case 2, is provided in contact with the input shaft 15.

As shown in FIG. 2, the electrical connection member 3 is disposed on the first axis A1 on the first axial side L1 of the input shaft 15. The electrical connection member 3 includes a housing 30, a brush 31, and a biasing member 32. The brush 31 is formed of a conductive material such as carbon or silver. The housing 30 is fixed to the case 2. The biasing member 32 is disposed in the housing 30 and biases the brush 31 toward the second axial side L2 such that a part of the brush 31 (end portion on the second axial side L2) protrudes from the housing 30. Accordingly, the brush 31 comes into contact with an end surface 15t of the input shaft 15 on the first axial side L1. The brush 31 and the input shaft 15 are both disposed on the first axis A1, and even when the input shaft 15 rotates, the contact between the brush 31 and the input shaft 15 is maintained by sliding contact.

The brush is not limited to such a form, and for example, a brush biased toward the first axial side L1 may be provided at an end portion of the input shaft 15 on the first axial side L1, and the brush may come into contact with an inner wall of the case 2 (inner wall of a facing wall portion 22 to be described later). That is, the electrical connection member 3 may have a configuration in which the brush 31 does not rotate or a configuration in which the brush 31 rotates, as long as the electrical connection member 3 includes a contact portion (a contactor, the brush 31) that electrically connects members that rotate relative to each other (for example, the case 2 and the input shaft 15) by sliding contact. In addition, the electrical connection member 3 may have a configuration in which a first member fixed to the case 2 (member also fixed to the housing 30) and a second member that is fixed to the input shaft 15 (target rotary shaft), that rotates integrally with the input shaft 15, and that is rotatable with respect to the housing 30 are accommodated inside the housing 30, and the first member and the second member are in sliding contact with each other inside the housing 30. In this case, at least one of the first member and the second member is a contactor (brush).

In the present embodiment, the electrical connection member 3 electrically connects the case 2 and the input shaft 15, and the input shaft 15 corresponds to the target rotary shaft. However, the electrical connection member 3 may be disposed to electrically connect the case 2 and the rotor shaft 14. In this case, the rotor shaft 14 corresponds to the target rotary shaft. In addition, an eddy current may also flow from the rotor shaft 14 to the counter shaft 40 via the input shaft 15 through engagement of metal gears. Therefore, it does not preclude the electrical connection member 3 from being disposed to electrically connect the case 2 and the counter shaft 40. In this case, the counter shaft 40 corresponds to the target rotary shaft.

When the target rotary shaft and the brush 31 come into sliding contact with each other, the brush 31 undergoes abrasion and an abrasion powder is generated. The brush 31 is formed of a conductive material, and the abrasion powder has conductivity. Therefore, the abrasion powder may electrically influence the coil 13 wound around the stator 12, a rotation sensor such as a resolver that detects the rotation of the rotor 11, and the like. In addition, a mechanical influence such as scratches may be given to the bearing that rotatably supports the target rotary shaft with respect to the case 2. The vehicle drive device 1 according to the present embodiment reduces such an influence of the abrasion powder. The bearing to be protected from the abrasion powder is a bearing that supports the target rotary shaft, and is referred to as the target bearing.

When the input shaft 15 corresponds to the target rotary shaft as in the present embodiment, the input bearing B2 corresponds to the target bearing. When the rotor shaft 14 corresponds to the target rotary shaft, the rotor bearing B1 located on a side close to the case 2 (the rotor bearing B1 on the second axial side L2 in FIG. 1) corresponds to the target bearing. When the counter shaft 40 corresponds to the target rotary shaft, the counter bearing B4 located on the side closer to the case 2 (the counter bearing B4 on the first axial side L1 in FIG. 1) corresponds to the target bearing.

As shown in FIG. 2, the case 2 includes a bearing support portion 21 that supports the input bearing B2 (target bearing). Since the input shaft 15 is supported by the input bearing B2, the input bearing B2 is disposed between the bearing support portion 21 and the input shaft 15 in the radial direction R. In addition, the case 2 includes the facing wall portion 22 that is disposed on the first axial side L1 with respect to the bearing support portion 21 and that faces the input bearing B2 from the first axial side L1. A target space E is formed between the end portion of the input shaft 15 on the first axial side L1 and the input bearing B2, and the inner wall of the facing wall portion 22. Since the input bearing B2 corresponds to the target bearing, the target space E is a space between the facing wall portion 22 and the target bearing in the axial direction L. In addition, the case 2 includes a surrounding wall portion 23 that surrounds the target space E from the radial outer side R2. In other words, the target space E is formed as a space surrounded by the target bearing (here, the input bearing B2), the facing wall portion 22, and the surrounding wall portion 23.

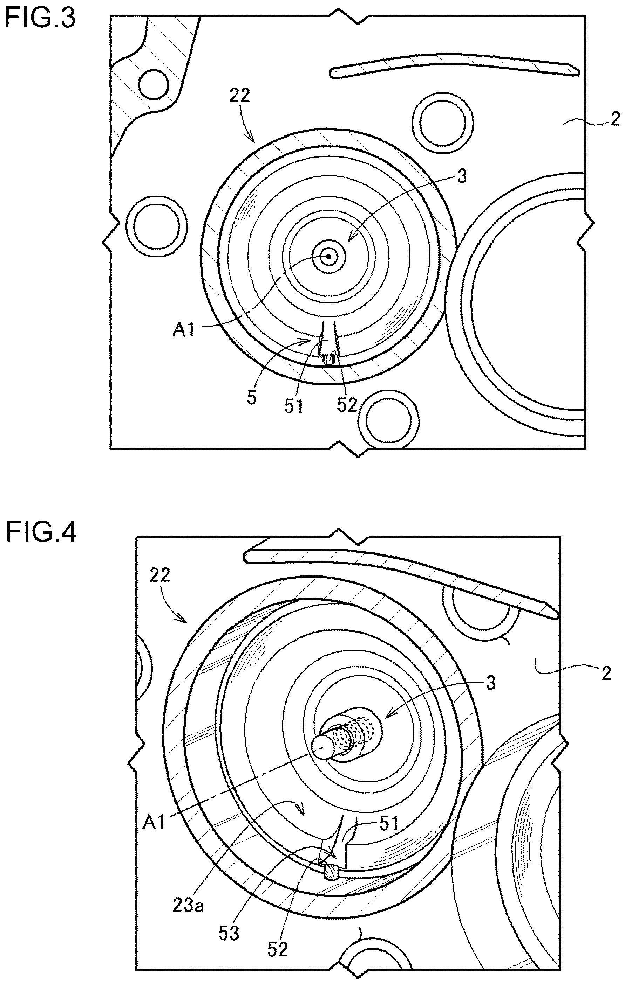

The electrical connection member 3 is disposed between the end surface 15t of the input shaft 15 and the facing wall portion 22, and is accommodated inside the target space E. The brush 31 is also disposed in the target space E. As described above, when the input shaft 15 and the brush 31 come into sliding contact with each other, the brush 31 undergoes abrasion, and the abrasion powder is generated in the target space E. In the present embodiment, as shown in FIGS. 2 to 4, a recess 5 formed to be partially recessed from an inner surface 23a of the surrounding wall portion 23 toward the radial outer side R2 is provided in a lower portion of the surrounding wall portion 23 located on the lower side V2 in the upper-lower direction V in the in-vehicle state. The recess 5 is preferably formed at a lowermost portion in the upper-lower direction V, but may be formed substantially around the lowermost portion within a range of about ± 20 degrees upward with the lowermost portion as a reference. The abrasion powder mixed in the oil for lubrication introduced into the target space E moves downward together with the oil into the target space E and is captured by the recess 5. The captured abrasion powder is accumulated in the recess 5.

As shown in FIG. 2, the case 2 includes an introduction path 26 through which the oil is introduced into the target space E. The oil supplied by being scooped up by the gear such as the differential input gear 61 or by being discharged from an oil pump (not shown) is introduced into the target space E through the introduction path 26. Here, a form in which the introduction path 26 is formed in the bearing support portion 21 or the surrounding wall portion 23 is exemplified, but this disclosure is not limited to this form, and a gap between the input bearing B2 and the bearing support portion 21 may be used as the introduction path 26, or the introduction path 26 may be formed in the facing wall portion 22. The oil introduced into the target space E passes through the input bearing B2, lubricates the input bearing B2, and flows out of the target space E. The abrasion powder mixed in the oil is captured by the recess 5 before the oil reaches the input bearing B2, so that the oil in which an amount of the mixed abrasion powder is reduced is supplied to the input bearing B2.

As shown in FIGS. 2 to 4, in the present embodiment, the recess 5 includes a recessed groove 51 extending in the axial direction L. Here, "extending in the axial direction L" means that a component in the axial direction L is included in an extending direction. That is, the recessed groove 51 may be formed to extend in parallel to the axial direction L, or may be formed to extend in a direction inclined with respect to the axial direction L. Of course, the recess 5 may be formed without including such a recessed groove 51. However, by providing the recessed groove 51, the abrasion powder can be captured more efficiently.

In addition, as shown in FIGS. 2 to 4, in the present embodiment, the recess 5 further includes a recessed hole 52 extending from a bottom portion 53 of the recessed groove 51 toward the radial outer side R2. Here, the extending direction of the recessed hole 52 (hole extending direction) is a direction inclined with respect to the radial direction R so as to proceed toward the first axial side L1 as it proceeds toward the radial outer side R2. However, this disclosure is not limited to this configuration, and the extending direction of the recessed hole 52 may be a direction parallel to the radial direction R or a direction inclined in a circumferential direction with respect to the radial direction R.

By accumulating the abrasion powder captured at the recessed groove 51 in the recessed hole 52, re-outflow of the captured abrasion powder can be easily prevented, and the abrasion powder can be continuously accumulated for a long period of time. A volume of the recessed hole 52 is preferably a volume capable of accumulating the abrasion powder generated over the entire product life of the vehicle drive device 1 in consideration of a use period of the vehicle drive device 1. That is, the volume of the recessed hole 52 is larger than an assumed maximum amount of the abrasion powder (volume when the abrasion powder is accumulated), and preferably about 1.5 times to 3 times the assumed maximum amount is secured. The recessed hole 52 can be formed by, for example, performing additional processing on the bottom portion 53 of the recessed groove 51 using a drill or the like. The volume of the recessed hole 52 can be defined by a perforation depth during this additional processing.

As described above, the recess 5 may be formed without including the recessed groove 51, and thus the recess 5 may be formed without including the recessed hole 52. Even when the recessed groove 51 is provided, the recessed groove 51 may be formed while the recessed hole 52 is not included. In any case, the entire recess 5 suitably has a secured volume capable of accumulating the abrasion powder generated over the entire product life of the vehicle drive device 1. For example, even when the recessed groove 51 or the recessed hole 52 is not provided, the volume of the recess 5 is larger than the assumed maximum amount of the abrasion powder (volume when the abrasion powder is accumulated), and preferably about 1.5 times to 3 times the assumed maximum amount is secured.

In addition, in the present embodiment, as shown in FIG. 2, the recessed hole 52 is formed such that an area of an opening where the recessed hole 52 opens at the bottom portion 53 of the recessed groove 51 is smaller than a cross-sectional area of the recessed hole 52. Here, the cross-sectional area of the recessed hole 52 is an area of a cross section inside the recessed hole 52 orthogonal to the hole extending direction. When the recessed hole 52 is formed by performing the additional processing on the bottom portion 53 of the recessed groove 51 using a drill or the like, the area of the opening of the recessed hole 52 in the recessed groove 51 and the cross-sectional area of the recessed hole 52 are substantially the same. In the present embodiment, a part of the opening is closed by the input bearing B2 (by an outer race of the input bearing B2), so that the area of the opening where the recessed hole 52 opens at the bottom portion 53 is smaller than the area of the opening of the recessed hole 52 itself.

Of course, the recessed hole 52 may be formed by a method other than the additional processing using a drill or the like. For example, the recessed hole 52 may be formed when the case 2 is formed by casting or the like. When the area of the opening in the bottom portion 53 can be made larger than the cross-sectional area inside the recessed hole 52 during the formation, the opening may not be closed by the outer race or the like of the bearing.

In addition, in the present embodiment, as shown in FIG. 2, the bearing support portion 21 includes a first support surface 27 that supports the input bearing B2 from the radial outer side R2, and a second support surface 28 that supports the input bearing B2 from the first axial side L1. Since the target space E is a space between the facing wall portion 22 and the input bearing B2 in the axial direction L, the target space E can be said to be a space between the facing wall portion 22 and the second support surface 28 in the axial direction L. Therefore, an end surface on the second axial side L2 of the surrounding wall portion 23 surrounding the target space E from the radial outer side R2 can function as the second support surface 28. Therefore, it can be said that the surrounding wall portion 23 is formed by a portion of the case 2 that is on the first axial side L1 with respect to the second support surface 28 and that forms the second support surface 28.

In the present embodiment, the recessed hole 52 described above is formed so as to open in a corner portion where the first support surface 27 and the second support surface 28 intersect each other and the inner surface 23a of the surrounding wall portion 23 extending to the first axial side L1 continuously from the second support surface 28. Since the input bearing B2 is supported by the first support surface 27 and the second support surface 28, at least a part of at least one of the opening open in the first support surface 27 and the opening open in the second support surface 28 is closed, so that the area of the opening where the recessed hole 52 opens at the bottom portion 53 is smaller than the area of the opening of the recessed hole 52 itself. Since the input bearing B2 is supported by the first support surface 27 and the second support surface 28, even when both of the opening open in the first support surface 27 and the opening open in the second support surface 28 are closed, the opening open in the inner surface 23a of the surrounding wall portion 23 is not closed, and thus there is no problem. Further, as shown in FIG. 2, since there is a high possibility that the entire opening in the first support surface 27 is closed, the recessed hole 52 may not be open in the first support surface 27. That is, it is suitable that the recess 5 includes the recessed hole 52 that opens in both the inner surface 23a of the surrounding wall portion 23 and the second support surface 28, that extends from the bottom portion 53 of the recessed groove 51 to the radial outer side R2, and that extends along a direction inclined with respect to the second support surface 28. Since the first support surface 27 and the second support surface 28 are orthogonal to each other, the recessed hole 52 also extends in a direction inclined with respect to the first support surface 27.

In addition, in the present embodiment, as described above, the recessed hole 52 is formed so as to open in the corner portion where the first support surface 27 and the second support surface 28 intersect each other. When the recessed hole 52 is formed by performing the additional processing on the bottom portion 53 of the recessed groove 51 using a drill or the like, a tool is less likely to come into contact with the first support surface 27 and the second support surface 28 during the processing, and thus the recessed hole 52 can be easily processed.

As shown in FIG. 2, in the present embodiment, a disposition region of the recess 5 (the recessed groove 51 and the recessed hole 52) in the axial direction L overlaps a disposition region of the electrical connection member 3 (in particular, a portion where the brush 31 is contact with the input shaft 15) in the axial direction L. That is, the recess 5 and the electrical connection member 3 overlap each other as viewed in the radial direction. Therefore, diffusion of the abrasion powder into the case 2 can be prevented without increasing a dimension of the vehicle drive device 1 in the axial direction L.

As described above, according to the present embodiment, the abrasion powder can be accumulated in the recess 5, and a possibility that the abrasion powder moves and influences the bearing and other members can be reduced. Since the recess 5 where the abrasion powder is accumulated has a simple configuration, it is easy to avoid an increase in size of the vehicle drive device 1 and the rotary electric machine 10. That is, according to the present embodiment, it is possible to prevent the diffusion of the abrasion powder generated by the electrical connection member 3 into the case 2 while preventing the increase in size of the drive device.

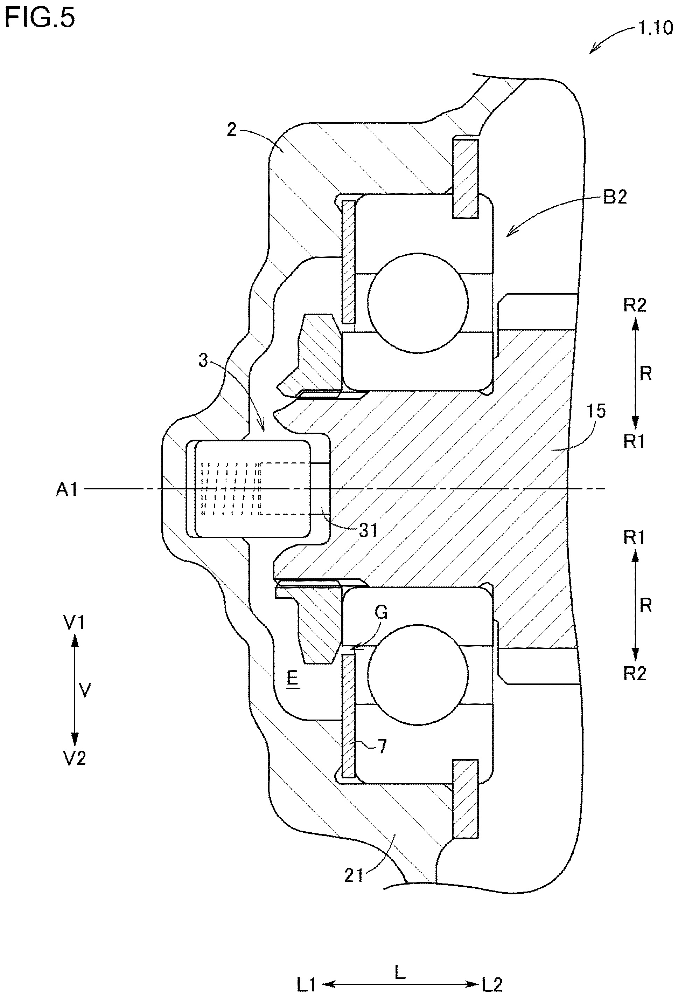

Hereinafter, the vehicle drive devices 1 according to comparative examples with respect to the vehicle drive device 1 according to the present embodiment will be described with reference to FIGS. 5 to 9. FIGS. 5 to 9 are each a partially enlarged cross-sectional view corresponding to FIG. 2.

FIG. 5 exemplifies the vehicle drive device 1 according to a first comparative example. As shown in FIG. 5, in the vehicle drive device 1 according to the first comparative example, a path of oil flowing from the target space E into the input bearing B2 is limited by a shim member 7. The oil from the target space E to the input bearing B2 is supplied through a gap G provided on the radial inner side R1 with respect to the shim member 7. On the lower side V2 with respect to the first axis A1, the gap G is located on the upper side V1 of the target space E and the input bearing B2. Since a large amount of abrasion powder sinking in the oil is present on the lower side V2, the abrasion powder can be prevented from reaching the input bearing B2 through the gap G. However, in this case, it is necessary to pay attention to an increase in component cost due to the addition of the shim member 7 and an increase in length of the vehicle drive device 1 in the axial direction L due to the disposition of the shim member 7.

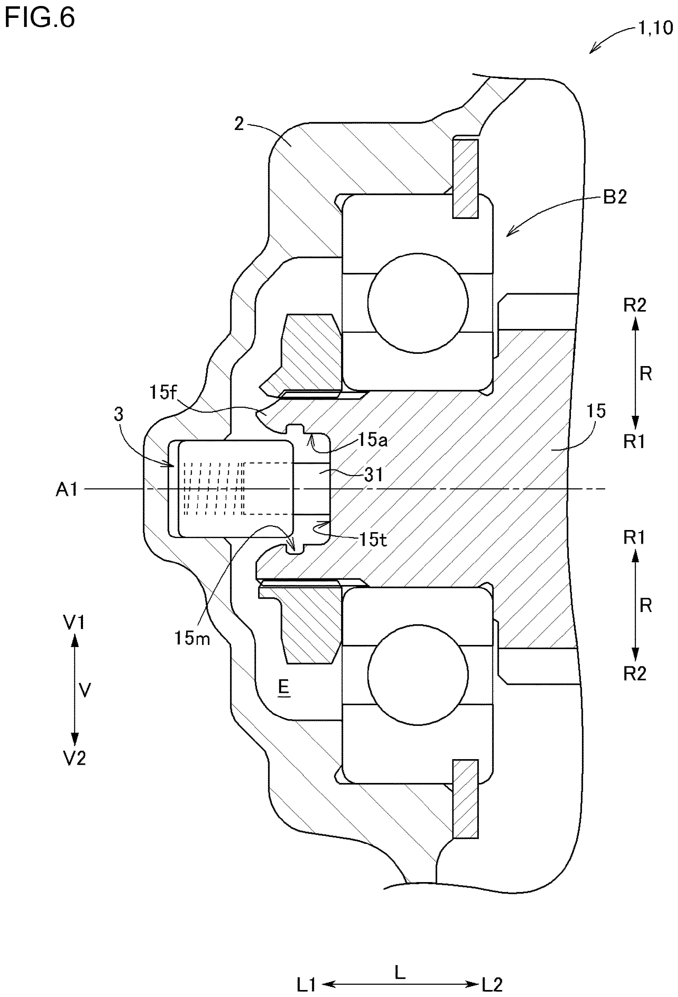

FIG. 6 exemplifies the vehicle drive device 1 according to a second comparative example. As shown in FIG. 6, in the vehicle drive device 1 according to the second comparative example, at an end portion of the input shaft 15 on the first axial side L1, a cylindrical flange portion 15f protruding from the radial outer side R2 of this end portion to the first axial side L1 is formed. The brush 31 is disposed on the radial inner side R1 of the flange portion 15f. A groove 15m recessed from an inner surface 15a, which is on the radial inner side R1 of the flange portion 15f, to the radial outer side R2 is formed on the inner surface 15a. The brush 31 is in sliding contact with the end surface 15t of the input shaft 15 on the second axial side L2 with respect to the groove 15m. An abrasion powder generated by the sliding contact is captured by the groove 15m. As is clear from the comparison between FIGS. 2 and 6, it is necessary to pay attention to points that a dimension of the input shaft 15 on the first axial side L1 from the end surface 15t of the input shaft 15 is increased by the provision of the groove 15m, and that a length of the vehicle drive device 1 in the axial direction L is likely to increase.

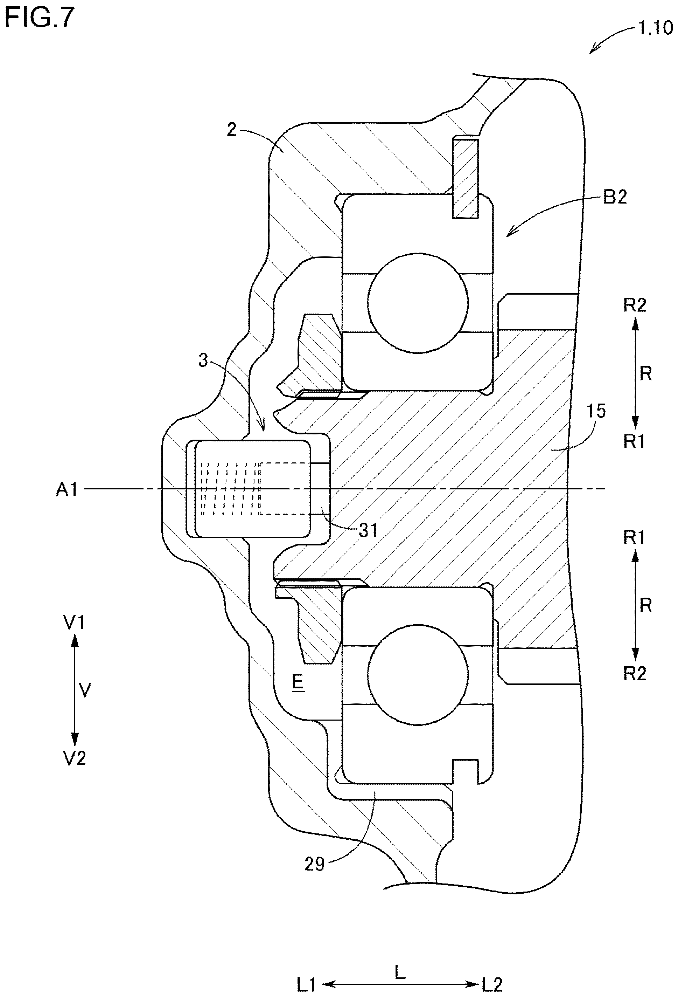

FIG. 7 exemplifies the vehicle drive device 1 according to a third comparative example. As shown in FIG. 7, in the vehicle drive device 1 according to the third comparative example, an oil discharge path 29, through which oil flows out of the target space E, is provided at a position on the lower side V2 in an in-vehicle state. When the oil mixed with an abrasion powder is quickly flowed out of the target space E through the oil discharge path 29, an amount of the oil containing the abrasion powder flowing into the input bearing B2 is reduced. In the third comparative example, it is necessary to pay attention to a reduction in amount of the oil supplied to the input bearing B2 as compared with the case where the oil discharge path 29 is not provided, and thus, pay attention to a possibility of an increase in amount of the oil circulated per unit time in the vehicle drive device 1. The abrasion powder contained in the oil can be removed by an oil filter or the like in an oil circulation path. However, it is also necessary to pay attention to a point that the abrasion powder may influence other portions in a path from the target space E to the oil filter, although a concentration of the abrasion powder decreases due to diffusion.

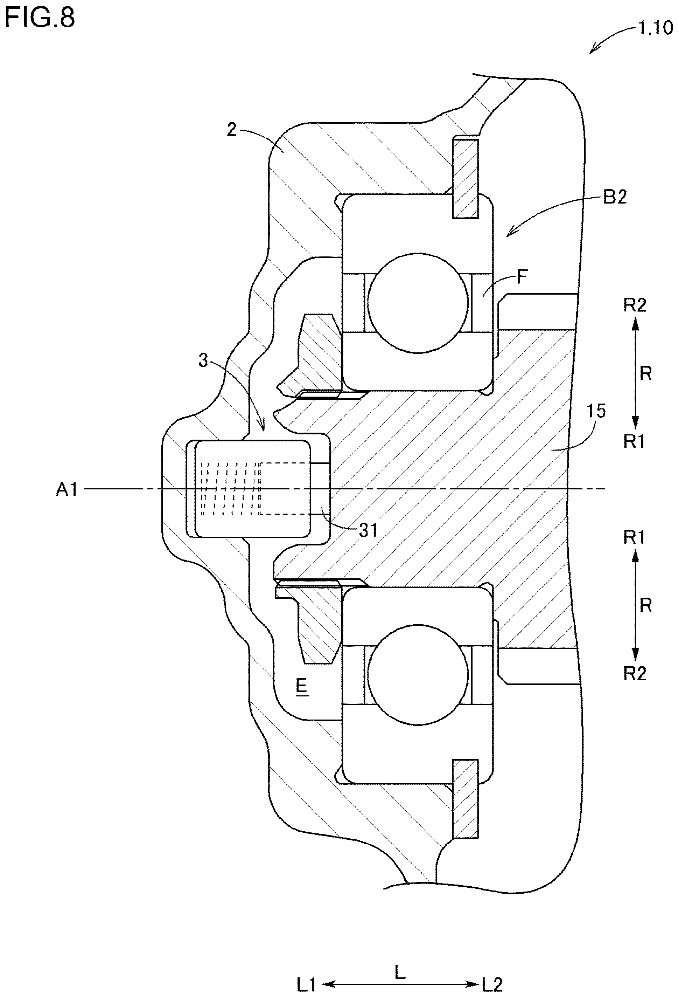

FIG. 8 exemplifies the vehicle drive device 1 according to a fourth comparative example. As shown in FIG. 8, in the vehicle drive device 1 according to the fourth comparative example, the input bearing B2 is implemented by a shield bearing in which steel balls (rolling members) are sealed inside a race member by a sealing member F. For lubrication of the bearing itself, a lubricant is also sealed inside the race member. Since the input bearing B2 is shielded, the influence of oil containing an abrasion powder can be eliminated. In this case, it is necessary to pay attention to an increase in member cost due to the use of the shield bearing, durability of the shield bearing (particularly, the sealing member F) in the oil, and the like.

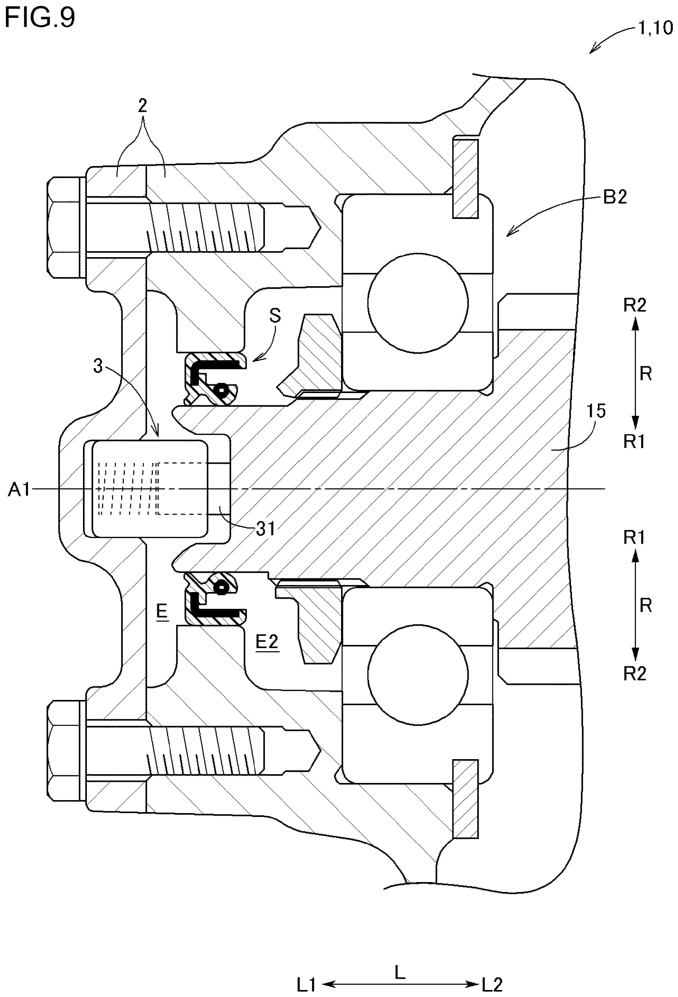

FIG. 9 exemplifies the vehicle drive device 1 according to a fifth comparative example. As shown in FIG. 9, in the vehicle drive device 1 according to the fifth comparative example, a flow of oil between the target space E and a bearing disposition space E2, in which the input bearing B2 is disposed, is blocked by a seal member S. Since the bearing is not lubricated by the oil containing an abrasion powder, the influence of the abrasion powder on the bearing can be reduced. However, in this case, it is necessary to pay attention to an increase in member cost due to the addition of the seal member S, an increase in size of the vehicle drive device 1 due to an increase in dimension in the axial direction L in order to provide a disposition space of the seal member S and the bearing disposition space E2, and the like.

Hereinafter, the drive device (1) according to the embodiment described above will be briefly summarized.

As one aspect, a drive device (1) includes: a rotor (11); a stator (12) including a coil (13); a target rotary shaft (15) to which rotation of the rotor (11) is transmitted; a case (2) accommodating the rotor (11), the stator (12), and the target rotary shaft (15); a target bearing (B2) configured to rotatably support the target rotary shaft (15) with respect to the case (2); and an electrical connection member (3) configured to electrically connect the target rotary shaft (15) and the case (2), in which a direction along a rotation axis (A1) of the target rotary shaft (15) is an axial direction (L), a direction orthogonal to the rotation axis (A1) is a radial direction (R), and one side in the axial direction (L) is a first axial side (L1), the case (2) includes a bearing support portion (21) configured to support the target bearing (B2), a facing wall portion (22) disposed on the first axial side (L1) with respect to the bearing support portion (21) and facing the target bearing (B2) from the first axial side (L1), and a surrounding wall portion (23) surrounding a target space (E) from an outer side (R2) in the radial direction (R), the target space being a space between the facing wall portion (22) and the target bearing (B2) in the axial direction (L), the electrical connection member (3) includes a contact portion (31) configured to electrically connect members that rotate relative to each other by sliding contact, the contact portion (31) is disposed in the target space (E), and a recess (5) formed to be partially recessed from an inner surface (23a) of the surrounding wall portion (23) toward the outer side (R2) in the radial direction (R) is provided in a lower portion (V2) of the surrounding wall portion (23).

According to this configuration, when an abrasion powder is generated by the sliding contact of the electrical connection member (3), the abrasion powder can be accumulated in the recess (5). Accordingly, it is possible to reduce a possibility that the abrasion powder moves from the contact portion (31) and influences the target bearing (B2) and other members. Since the recess (5) where the abrasion powder is accumulated has a simple configuration formed to be recessed in the lower portion (V2) of the inner surface (23a) of the surrounding wall portion (23), it is easy to avoid an increase in size of the drive device (1). That is, according to this configuration, it is possible to prevent the diffusion of the abrasion powder generated by the electrical connection member (3) into the case (2) while preventing the increase in size of the drive device (1).

The drive device (1) may include an introduction path (26) configured to allow oil to be introduced into the target space (E) therethrough, in which the oil introduced through the introduction path (26) into the target space (E) may flow out of the target space (E) through the target bearing (B2), and the recess (5) may include a recessed groove (51) extending in the axial direction (L).

According to this configuration, when the oil introduced into the target space (E) flows along the inner surface (23a) of the surrounding wall portion (23) and is guided to the target bearing (B2), the abrasion powder is likely to stay in the recessed groove (51). Therefore, the abrasion powder contained in the oil is easily accumulated in the recess (5).

In the drive device (1), the recess (5) may include a recessed hole (52) extending from a bottom portion (53) of the recessed groove (51) toward the outer side (R2) in the radial direction (R).

According to this configuration, the abrasion powder entering the recessed groove (51) further enters the recessed hole (52), so that the abrasion powder is less likely to leak from the recess (5), and a larger amount of the abrasion powder can be accumulated in the recess (5).

In the drive device (1), the bearing support portion (21) may include a first support surface (27) configured to support the target bearing (B2) from the outer side (R2) in the radial direction (R) and a second support surface (28) configured to support the target bearing (B2) from the first axial side (L1), the surrounding wall portion (23) may be formed by a portion of the case (2) that is on the first axial side (L1) with respect to the second support surface (28) and that forms the second support surface (28), and the recess (5) may include a recessed hole (52) that opens in both the inner surface (23a) of the surrounding wall portion (23) and the second support surface (28) and that extends along a direction inclined with respect to the second support surface (28).

According to this configuration, a part of a portion of the recessed hole (52) that opens in the second support surface (28) can be closed by the target bearing (B2) supported by the second support surface (28), and an area of the opening of the recessed hole (52) can be made smaller than a cross-sectional area inside the recessed hole (52) while the recessed hole (52) has a simple shape. By forming the recessed hole (52) in such a shape (bottleneck shape), it is possible to make it difficult for the abrasion powder once entering the recessed hole (52) to exit from the recessed hole (52).

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A drive device (1) comprising:
a rotor (11);
a stator (12) including a coil (13);
a target rotary shaft (14, 15, 40) to which rotation of the rotor is transmitted;
a case (2) accommodating the rotor, the stator, and the target rotary shaft;
a target bearing (B1, B2, B4) configured to rotatably support the target rotary shaft with respect to the case; and
an electrical connection member (3) configured to electrically connect the target rotary shaft and the case, wherein
a direction along a rotation axis (A1) of the target rotary shaft is an axial direction (L), a direction orthogonal to the rotation axis is a radial direction (R), and one side in the axial direction is a first axial side (L1),
the case includes
a bearing support portion (21) configured to support the target bearing,
a facing wall portion (22) disposed on the first axial side with respect to the bearing support portion and facing the target bearing from the first axial side, and
a surrounding wall portion (23) surrounding a target space (E) from an outer side (R2) in the radial direction, the target space being a space between the facing wall portion and the target bearing in the axial direction,
the electrical connection member includes a contact portion (31) configured to electrically connect members that rotate relative to each other by sliding contact,
the contact portion is disposed in the target space, and
a recess (5) formed to be partially recessed from an inner surface (23a) of the surrounding wall portion toward the outer side in the radial direction is provided in a lower portion (V2) of the surrounding wall portion.

2. The drive device according to claim 1, further comprising:
an introduction path (26) configured to allow oil to be introduced into the target space therethrough, wherein
the oil introduced through the introduction path into the target space flows out of the target space through the target bearing, and
the recess includes a recessed groove (51) extending in the axial direction.

3. The drive device according to claim 2, wherein
the recess includes a recessed hole (52) extending from a bottom portion of the recessed groove toward the outer side in the radial direction.

4. The drive device according to any one of claims 1 to 3, wherein
the bearing support portion includes a first support surface (27) configured to support the target bearing from the outer side in the radial direction and a second support surface (28) configured to support the target bearing from the first axial side,
the surrounding wall portion is formed by a portion of the case that is on the first axial side with respect to the second support surface and that forms the second support surface, and
the recess includes a recessed hole (52) that opens in both the inner surface of the surrounding wall portion and the second support surface and that extends along a direction inclined with respect to the second support surface.
